# EUROPEAN PATENT APPLICATION

(11) **EP 4 779 790 A1**
(43) Date of publication of application: **22.07.2026**
(21) Application number: 25742805.2
(22) Date of filing: 10.04.2025
(51) Int. Cl.: H01M 50/533, H01M 50/54

(54) **BATTERY CELL, BATTERY AND BATTERY PACK**

(30) Priority: 05.12.2024 CN 202411786915
(71) Applicant: Eve Power Co., Ltd., Jingmen, Hubei 448000 (CN)
(72) Inventor: WEI, Haitao., Jingmen Hubei 448000 (CN); ZHAO, Zhenshuai., Jingmen Hubei 448000 (CN); HUANG, Chengjie, Jingmen Hubei 448000 (CN); ZHU, Weihua., Jingmen Hubei 448000 (CN)
(74) Representative: Berggren Oy
(86) International application number: PCT/CN2025/088186
(87) International publication number: WO 2026/118341

(57) **Abstract**

The present disclosure provides a core, a battery, and a battery pack. The core includes: an electrode sheet assembly including a plurality of electrode sheets each including a tab; where a plurality of tabs are welded to form a weld imprint area, a height of the tabs after folded is H1, and the height of the weld imprint area is H2; and where the core further has two side surfaces opposite to each other in a thickness direction of the core, a distance between the weld imprint area and one of the side surfaces is D, and a thickness of the core is d; and where 0.42< arctan((H1-H2)/(d-D))/arctan((H1-H2)/D)≤1.

## Description

This application claims priority to Chinese Patent Application No. 202411786915.X, filed with the Chinese Patent Office on December 5, 2024, content of which is incorporated herein by reference in its entirety.

### TECHNICAL FIELD

The present disclosure relates to the field of battery technologies, and more particular to a core, a battery and a battery pack.

### BACKGROUND

A battery includes a core, where the core includes an electrode sheet assembly, the electrode sheet assembly includes a plurality of electrode sheets each provided with a tab, the plurality of electrode sheets correspond to a plurality of tabs, and the plurality of tabs are integrally connected by ultrasonic welding.

### SUMMARY

In the related art, defects such as dummy weld and missing weld may occur during ultrasonic weld of the plurality of tabs, which may affect the weld quality and weld tension, and further cause the tabs to break and reduce the safety performance of the battery.

In a first aspect, embodiments of the present disclosure provide a core for a battery, including: an electrode sheet assembly including a plurality of electrode sheets each including a tab; where a plurality of tabs are welded to form a weld imprint area, a height of the tabs after folded is H1, and the height of the weld imprint area is H2; and where the core further has two side surfaces opposite to each other in a thickness direction of the core, a distance between the weld imprint area and one of the side surfaces is D, and a thickness of the core is d; and where 0.42≤arctan((H1-H2)/(d-D))/arctan((H1-H2)/D)≤1.

In a second aspect, the embodiments of the present disclosure provide a battery, including: a housing; and a core disposed in the housing and being the core as described above.

In a third aspect, the embodiments of the present disclosure provide a battery pack, including: a case; and a plurality of batteries disposed in the case and each being the battery as described above.

### Beneficial Effects

According to the core provided in the present disclosure, the height H1 of the tabs of the core after folded, the thickness d of the core, the height H2 of the weld imprint area of the tabs, and the distance D between the weld imprint area and one side surface of the core are controlled to meet 0.42≤arctan((H1-H2)/(d-D))/arctan((H1-H2)/D)≤1. As such, it is found by performing a tensile test on the tabs of the core that the tabs of the core meet a tensile requirement, and it is found by performing a drop test on a battery composed of the core that the battery meets a drop test requirement, so that the battery can improve the weld strength of the tabs while improving the safety performance of the battery.

According to the battery provided by the present disclosure, the battery includes the core as described above and is designed based on the core as described above, and thus beneficial effects of the battery refer to the beneficial effects of the core as described above, which is not described repeated herein.

According to the battery pack provided by the present disclosure, the battery pack includes the batteries as described above and are designed based on the batteries as described above, and thus beneficial effects of the battery pack refer to the beneficial effects of the battery, which is not described repeated herein.

### DESCRIPTION OF THE DRAWINGS

FIG. 1 is a top view of a single electrode sheet group unit after stacked according to some embodiments of the present disclosure.
FIG. 2 is a partially enlarged view of FIG. 1.
FIG. 3 is a side view of a core according to some embodiments of the present disclosure.
FIG. 4 is a front diagram of a core according to some embodiments of the present disclosure.
FIG. 5 is a front diagram of two connected cores according to some embodiments of the present disclosure.
FIG. 6 is a side view of two connected cores according to some embodiments of the present disclosure.

REFERENCE SIGNS: 100. Core; 101. First core; 102. Second core; 110. Side surface;
1. Electrode sheet assembly; 10. Electrode sheet; 11. Positive electrode sheet; 12. Negative electrode sheet; 13. Separator;
2. Tab; 21. Weld imprint area; 211. First weld imprint area; 212. Second weld imprint area; 22. Positive tab; 23. Negative tab;
3. Connection sheet.

### DETAILED DESCRIPTION

Embodiments of the present disclosure provide a battery, including: a housing assembly; and a core. The battery may be a cylindrical battery or a prismatic battery.

The housing assembly of the battery includes a housing and a top cover welded onto an open end of the housing. An electrode pole may be disposed on the top cover and may be a positive electrode pole and/or a negative electrode pole.

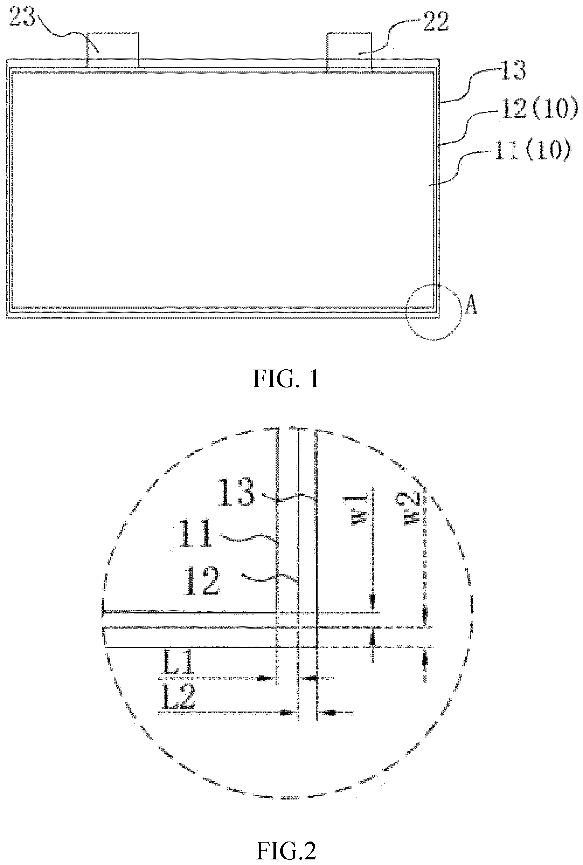

As shown in FIGS. 1 to 3, the core 100 includes an electrode sheet assembly 1, where the electrode sheet assembly 1 includes a plurality of electrode sheet group units that are combined by stacking or winding to form the core. Each of the electrode sheet group units includes a positive electrode sheet 11, a negative electrode sheet 12, and a separator 13, where the separator 13 is located between the positive electrode sheet 11 and the negative electrode sheet 12 and configured to separate the positive electrode sheet 11 from the negative electrode sheet 12. Each positive electrode sheet 11 includes a positive electrode tab 22, and each negative electrode sheet 12 includes a negative electrode tab 23. After the plurality of electrode sheet group units are stacked, a plurality of positive electrode tabs 22 are folded and integrally connected by ultrasonic welding, and a plurality of negative electrode tabs 23 are integrally connected by ultrasonic welding. The plurality of positive electrode tabs 22 or the plurality of negative electrode tabs 23 are welded to form a weld imprint area 21.

As shown in FIGS. 1 and 2, a size of each of the positive electrode sheets 11 is smaller than that of each of the negative electrode sheets, which is in turn smaller than that of each of the separators 13. In a specific embodiment, the prismatic battery is used as an example, and each of the positive electrode sheets 11, each of the negative electrode sheets 12, and each of the separators 13 all are prismatic, where a difference L1 between the length of the each of the negative electrode sheets 12 and the length of the each of the positive electrode sheets 11 is in the range of 0.5mm to 1.5mm, and a difference w1 between the width of the each of the negative electrode sheets 12 and the width of the each of the positive electrode sheets 11 is in the range of 0.5mm to 2.5mm. A difference L2 between the length of the each of the separators 13 and the length of the each of the negative electrode sheets 12 is in the range of 0.5mm to 1.5mm, and a difference w2 between the width of the each of the separators 13 and the width of the each of the negative electrode sheets 12 is in the range of 1mm to 2mm. The size of the separator 13 is larger than that of the negative electrode sheet 12 and that of the positive electrode sheet 11, which may effectively separate the positive electrode sheet 11 from the negative electrode sheet 12, thereby preventing short circuits. If the size of the positive electrode sheet 11 is larger than that of the negative electrode sheet 12, excess lithium ions of the positive electrode sheet 11 cannot enter the negative electrode sheet 12 when the battery is charged, and the lithium ions of the positive electrode sheet 11 are deposited on the surface of the negative electrode sheet 12, thereby deteriorating the cycling performance of the battery. The size of the negative electrode sheet 12 is configured to be larger than that of the positive electrode sheet 11, which can effectively improve the lithium precipitation on the surface of the negative electrode sheet 12.

The embodiments of the present disclosure further provide a method for preparing a lithium ion battery, including: preparing a positive electrode sheet, preparing a negative electrode sheet, assembling a core, welding tabs, and assembling the lithium ion battery.

The preparing of the positive electrode sheet includes: dispersing and uniformly mixing a positive electrode active material, a conductive agent, and a binder in a solvent N-methyl-2-pyrrolidone (NMP) to obtain a slurry; coating the slurry onto a positive electrode current collector; and performing various processes such as drying, cold pressing, die cutting, and trimming on the coated current collector, to obtain the positive electrode sheet, where suitable positive electrode active materials include one or more of lithium iron phosphate, lithium manganese iron phosphate, or ternary lithium cobalt oxide. Mass ratio of the positive electrode active material: mass ratio of the conductive agent: mass ratio of the binder is (94.5%~97%): (1.5%~3%): (1.5%~2.5%).

The preparing of the negative electrode sheet includes: dispersing and uniformly mixing a negative electrode active material, a conductive agent, and a binder in a solvent at a certain proportion to obtain a slurry; coating the slurry on a negative electrode current collector; and performing various processes such as drying, cold pressing, die cutting, and trimming on the coated current collector, to obtain the negative electrode sheet.

The assembling of the core includes: stacking a negative electrode sheet, a separator, a positive electrode sheet, and a separator in a reciprocating order by laminating, and then performing hot pressing and shaping.

The welding of the tabs: the tabs of the core are typically a stack of multilayer foils, and the tabs are welded by integrally connecting the multilayer foils by ultrasonic welding. The tabs are then welded to the electrode poles of the battery by laser welding, respectively. Alternatively, the tabs are welded onto a connection sheet by the laser welding, and then the connection sheet is electrically connected to the electrode poles.

The assembling of the lithium ion battery includes: placing the core in a housing, welding a cover sheet at one end of the housing, and completing assembly of the battery assembly by various processes including electrolyte injection, formation, and capacity grading.

In the related art, welding defects such as dummy weld and missing weld may occur during ultrasonic weld of the plurality of tabs, which may affect the weld quality and welding tension, and further cause the tabs to break and reduce the safety performance of the battery.

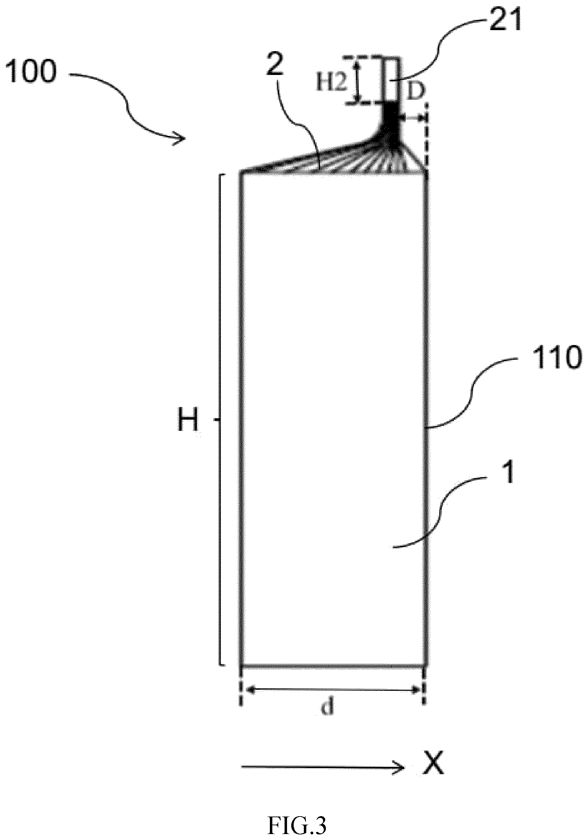

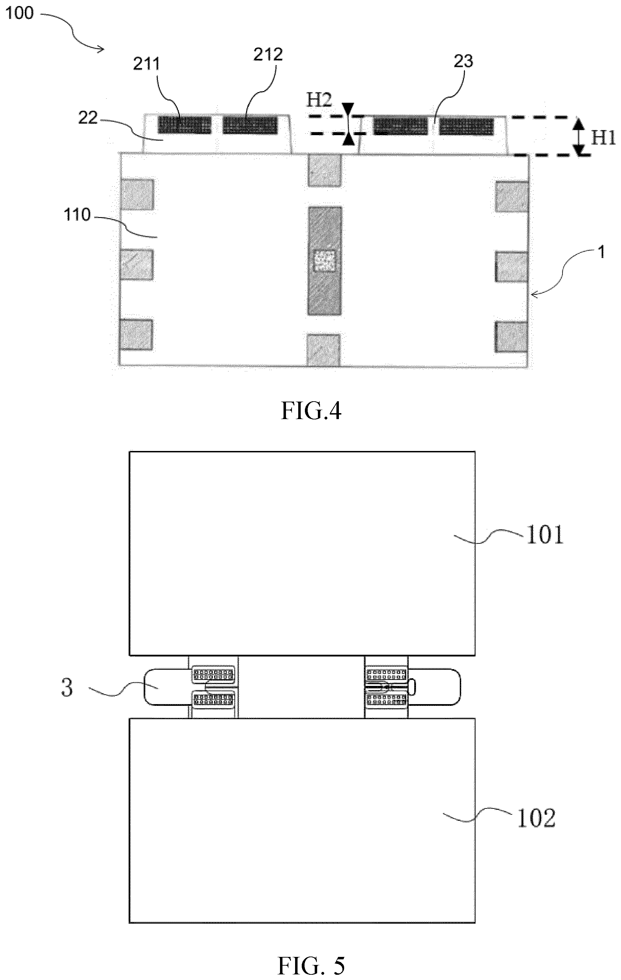

In some embodiments of the present disclosure, as shown in FIGS. 3 and 4, the core 100 includes two side surfaces 110 opposite to each other in a thickness direction of the core, where the thickness direction is the x direction shown in FIG. 3. The height of the tabs after folded is set to H1, the height of the weld imprint area 21 formed by welding the plurality of tabs 2 is set to H2, the distance between the weld imprint area 21 and one side surface of the core 100 is set to D, and the thickness of the core 100 is set to d, where design parameters of the core 100 meet a first expression: 0.42≤arctan((H1-H2)/(d-D))/arctan((H1-H2)/D) ≤1. In a specific implementation, a ratio of arctan ((H1-H2)/(d-D)) to arctan ((H1-H2)/D) may be 0.42, 0.45, 0.48, 0.5, 0.52, 0.55, 0.58, 0.6, 0.62, 0.65, 0.68, 0.7, 0.72, 0.75, 0.78, 0.8, 0.82, 0.85, 0.88, 0.9, 0.92, 0.95, 0.98, 1.0, and a value between any two of the above values or a range between any two of the above values.

The height of the weld imprint area 21 refers to its protrusion height in a direction perpendicular to a tab plane. A method for measuring the height H2 of the weld imprint area 21 is as follows: using an unwelded tab surface as a reference plane, and employing a precision measurement instrument (including but not limited to a micrometer or height gauge) to measure a vertical distance from the reference plane to the highest point of weld imprint area 21 as the height of weld imprint area 21.

In some embodiments, the design parameters of the core 100 meets a second expression: H1-H2≤d/2. While a weld strength of the tabs is improved, it is advantageous to improve a volume utilization rate of the battery by limiting a position of the weld imprint area, thereby improving the energy density of the battery.

A core embodiment meeting both the first expression and the second expression and a core comparative example not meeting the first expression or the second expression are designed in embodiments of the present disclosure and these cores are respectively prepared into batteries to perform the weld tension test of the tabs of the batteries and the drop test of the batteries.

Embodiments of the present disclosure further provide a method for testing weld tension of a tab of a battery, including:

a first step of installing a sample: one end of the tab of the battery is fixed in an upper clamp of a tension testing machine and another end of the tab is fixed in a lower clamp of the tension testing machine, and it is confirmed that the tab is accurately positioned in an included angle of the tension testing machine, and a force for clamping the tab is moderate, so that the tab is neither loosened nor damaged;

a second step of setting test parameters: parameters such as loading speed and maximum tension value of the tension testing machine are designed according to specifications and test requirements of the tab of the battery;

a third step of performing a test: the tension testing machine is started to slowly load the tab of the battery, and during the loading of the tab, the tension testing machine records change of the tension value and deformation of the tab in real time, and continuously loads the tab until the tab weld imprint area is broken or reaches a set maximum tension value.

a fourth step of repeating the test: 10pcs batteries are needed for each embodiment or comparative example for verification, the maximum tension force value of the tab of the battery is records to calculate the average weld tension force value of the tab of the battery for each embodiment or example, it is observed whether the weld imprint area of the tab of the battery is broken, and the corresponding weld tension force value is recorded if the weld imprint area of the tab of the battery is broken.

The weld tension standard of the tab is larger than or equal to 60N.

Embodiments of the present disclosure further provide a method for testing a drop test of a battery, where the method has a reference standard of GB31485-2015 and includes:
a first step: when the battery is charged at a constant current of 1C until it reaches a predetermined termination voltage of the battery, the battery is switched to constant voltage charging until the charging current drops to 0.05C; and
a second step: positive and negative electrode terminals of the battery fall down freely from the 1.2m height to a cement floor;
a third step: observing for 1h; and
a fourth step: 10pcs batteries are needed for each embodiment or comparative example for verification, and the pass rate of the drop test of the battery is recorded.

The present disclosure provides six battery embodiments meeting both the first expression and the second expression and seven battery comparative examples not meeting at least one of the first expression and the second expression to perform the tension test of the tab of the battery and the drop test of the battery and record a test result.

Various parameters of the battery and the result of the tension test and the drop test of the battery in the six embodiments and the seven comparative examples are shown in Tables 1 and 2 below.

**Table 1**

| | First embodiment | Second embodiment | Third embodiment | First comparative example | Second comparative example | Third comparative example |
|---|---|---|---|---|---|---|
| Thickness d of core | 23 | 23 | 30 | 16 | 23 | 23 |
| Height H1 of tab | 18 | 18 | 18 | 18 | 24 | 18 |
| Height H2 of weld imprint area | 8 | 12 | 8 | 8 | 8 | 3 |
| Distance D of weld imprint area | 10 | 10 | 10 | 10 | 10 | 10 |
| First expression | 0.83 | 0.80 | 0.59 | 1.31 | 0.88 | 0.87 |

| Second expression | meeting | meeting | meeting | Not meeting | Not meeting | Not meeting |
|---|---|---|---|---|---|---|
| Weld tension/N | 64 | 71 | 61 | 58 | 68 | 55 |
| Pass rate of drop test/% | 100 | 100 | 100 | 70 | 100 | 50 |

**Table 2**

| | Fourth embodiment | Fifth embodiment | sixth embodiment | Fourth comparative example | Fifth comparative example | Sixth comparative example | Seventh comparative example |
|---|---|---|---|---|---|---|---|
| Thickness d of core | 26 | 17 | 22 | 23 | 23 | 26 | 24 |
| Heigh t H1 of tab | 22 | 14 | 20 | 18 | 18 | 21.5 | 23 |
| Heigh t H2 of weld imprint area | 10 | 5.5 | 9 | 8 | 8 | 3 | 9 |
| distanceD of weld imprint area | 13 | 4.5 | 10 | 14 | 3 | 3.5 | 13 |
| First expression | 1.00 | 0.55 | 0.89 | 1.35 | 0.36 | 0.50 | 1.10 |
| Second expression | meeting | meeting | meeting | meeting | meeting | Not meeting | Not meeting |
| Weld tension/N | 67 | 64 | 65 | 56 | 57 | 56 | 70 |
| Pass rate of drop test/% | 100 | 100 | 100 | 70 | 70 | 50 | 100 |

As can be seen from the test data of the first embodiment, the second embodiment, the third embodiment, the fourth embodiment, the fifth embodiment, and the sixth embodiment of the tables 1 and 2 that, when the above-mentioned design parameters of the core including the height H1 of the tab 2, the height H2 of the weld imprint area, the thickness d of the core, and the distance D between the weld imprint area 21 and a side surface 110 of the core meet both the first expression and the second expression, the weld tension of the tab 2 of the core meets the standard, and the pass rate of the drop test of the battery is 100%.

It should be noted that the above-mentioned design parameters of the core of the second embodiment meet the first expression and the second expression, and there is no risk in weld tension test of the tab of the core and the drop test of the battery. However, the height of the weld imprint area is too high, so that the volume utilization rate inside the battery is lower, and the energy density of the battery is affected. The above-mentioned design parameters of the core of the third embodiment meet the first expression and the second expression, and there is no risk in the weld tension test of the tab of the core and the drop test of the battery. However, the thickness d of the core is too thick, which causes the length of the tab of the electrode sheet 10 to be excessively long, so that the volume utilization rate of the battery is lower, thereby reducing the energy density of the battery.

As can be seen from the test data of the first comparative example in Table 1 that, when the above-mentioned design parameters of the core do not meet both the first expression and the second expression, the weld tension of the tab of the battery does not meet the standard, resulting in a high broken risk of the tab, and the drop test of the battery does not meet the standard, resulting in affecting the safety performance of the battery. As can be seen from the test data of the third comparative example in Table 1 that, when the above-mentioned design parameters of the core do not meet the second expression and the height H2 of the weld imprint area is too small, the weld tension of the tab of the battery does not meet the standard, resulting in a high broken risk of the tab, and the drop test of the battery does not meet the standard, resulting in affecting the safety performance of the battery. It should be noted that the above-mentioned design parameters of the battery provided in the second comparative example do not meet the second expression but meets the first expression, and the height H1 of the tab after folded is significantly higher, while the height of the weld imprint area of the tab remains substantially unchanged. Although the weld tension test of the tab and the drop test of the battery can be passed, the height H1 of the tab after folded is too high, which results in too much redundant space inside the battery and makes the volumetric energy density uncompetitive.

As can be seen from the test data of the fourth comparative example and the fifth comparative example in Table 2 that, when the design parameters of the core do not meet the first expression, the tab of the battery may not pass the tension test and the battery may not pass the drop test. As can be seen from the test data of the sixth comparative example in Table 2 that, when the design parameters of the core do not meet both the first expression and the second expression, the tab of the battery may not pass the tension test and the battery may not pass the drop test. As can be seen from the test data of the seventh comparative example in Table 2 that, although the design parameters of the battery do not meet the first expression and the second expression, the tab of the battery may fail the tension test and the battery may fail the drop test. It is found by analysis that the height H1 of the tab of the seventh comparative example is too large, and the volume utilization rate of the core is low, which is unfavorable for improving the energy density of the battery.

In some embodiments, still referring to FIG. 3, the height of the electrode sheet assembly 1 is H and a ratio of the height H1 of the tab 2 after folded to the height H of the electrode sheet assembly 1 is in the range of 0.02 to 0.13. In one embodiment, the height H of the electrode sheet assembly 1 is in the range of 80mm to 180mm and the height H1 of the tab after folded is in the range of 14mm to 22mm.

The height H of the electrode sheet assembly 1 may be designed to be 80mm, 100mm, 120mm, 150mm, 180mm, and a value between any two of the above values or a range between any two of the above values depending on the capacity of the battery.

The inventors have found through research that, when the height H1 of the tab after folded is smaller than 14mm, an area of the weld imprint area where the tab is located is smaller, thereby affecting the weld strength of the tab. When the height of the tab after folded is greater than 22mm, the space utilization rate of the battery is lower, thereby affecting the energy density of the battery. In a specific implementation, the height H1 may be 14mm, 15mm, 16mm, 17mm, 18mm, 19mm, 20mm, 21mm, 22mm, and a value between any two of the above values or a range between any two of the above values.

In a specific implementation, a ratio of H1 to H may be 0.08, 0.10, 0.12, 0.14, 0.16, 0.20, 0.24, 0.28 and a value between any two of the above values or a range between any two of the above values, which facilitates the battery to maintain a high energy density while enhancing the weld strength of the tab.

In some embodiments, a ratio of the height H2 of the weld imprint area 21 of the tab 2 to the height H of the electrode sheet assembly 1 is in the range of 0.02 to 0.13. In one embodiment, the height H of the electrode sheet assembly 1 is in the range of 80mm to 180mm and the height H2 of the weld imprint area is in the range of 4mm to 10mm.

In a specific implementation, the height H2 may be 4mm, 5mm, 6mm, 7mm, 8mm, 9mm, 10mm, and a value between any two of the above values or a range between any two of the above values. The inventors have found through research that, when the height H2 is smaller than 4mm, an area of the weld imprint area is smaller, and the weld strength of the tab is insufficient. When H2 is larger than 10 mm, the height H1 of the tab is increased correspondingly, so that the space utilization rate of the battery is lower.

In a specific implementation, a ratio of H2 to H may be 0.02, 0.03, 0.04, 0.05, 0.06, 0.07, 0.08, 0.09, 0.1, 0.11, 0.12, 0.13 and a value between any two of the above values or a range between any two of the above values, which facilitates the battery to maintain a higher energy density while enhancing the weld strength of the tab.

In some embodiments, d-D is in the range of 4mm to 22mm, where the thickness d of the core is in the range of 17mm to 26mm and the distance D between the weld imprint area of the tab and the side surface 110 of the core is in the range of 4mm to 13mm.

**I**n a specific implementation, d-D may be 4mm, 6mm, 8mm, 10mm, 12mm, 15mm, 17mm, 19mm, 21mm, 22mm, and a value between any two of the above values or a range between any two of the above values. By defining the d-D to be in the range of 4mm to 22mm, the weld strength of the tab can be maintained while maintaining higher volume utilization of the battery.

In some embodiments, a ratio of the thickness d of the core to the distance D between the weld imprint area of the tab and the side surface 110 of the core is in the range of 0.15 to 0.5. The thickness d of the core is in the range of 17mm to 26mm and the distance D between the weld imprint area of the tab and the side surface 110 of the core is in the range of 4mm to 13mm.

In a specific implementation, d may be 17mm, 18mm, 19mm, 20mm, 21mm, 22mm, 23mm, 24mm, 25mm, 26mm, and a value between any two of the above values or a range between any two of the above values. The inventors have found through research that, when d is set to be less than 17mm, the capacity of the battery is smaller, resulting in affecting the energy density of the battery. When d is set to be greater than 26mm, the capacity of the battery is excessively high, resulting in thermal runaway of the battery to easily occur and further high risk of the battery.

In a specific implementation, the distance D between the weld imprint area of the tab and the side surface 110 of the core may be 4mm, 5mm, 6mm, 7mm, 8mm, 9mm, 10mm, 11mm, 12mm, 13mm, and a value between any two of the above values or a range between any two of the above values. The inventors have found through research that, when the distance D between the weld imprint area of the tab and the side surface 110 of the core is less than 4 mm, for example, the distance D between the left tab and the side surface 110 of the core is less than 4 mm, the length of the right tab will be relatively long in a case that the thickness of the core remains unchanged, thereby causing the coated area of the electrode sheet 10 corresponding to the right tab to be reduced and causing the capacity of the battery to be reduced. When the distance D between the weld imprint area of the tab and the side surface 110 of the core is greater than 13mm, the volume utilization rate of the battery is affected.

In a specific implementation, a ratio of the thickness d of the core to the distance D between the weld imprint area of the tab and the side surface 110 of the core is 0.15, 0.18, 0.2, 0.25, 0.3, 0.35, 0.4, 0.45, 0.5, and a value between any two of the above values or a range between any two of the above values. When the ratio of the thickness d of the core to the distance D between the weld imprint area of the tab and the side surface 110 of the core meets the above-mentioned range, it is advantageous to improve the weld strength of the tab and the safety performance of the battery while increasing the energy density of the battery.

In some embodiments, a portion of each of the positive tabs 22 or the negative tabs 23 is welded to form a first weld imprint area 211, another portion of the each of the positive tabs 22 or the negative tabs 23 is welded to form a second weld imprint area 212, and the first weld imprint area 211 is spaced apart from the second weld imprint area 212. Weld imprint areas of the tabs are arranged in two, corresponding to discontinuous welding. If only one weld imprint area is provided, all of the positive tabs 22 or the negative tabs 23 are continuously welded to the same weld imprint area, and the heat of the welding is continuously increased during the continuous welding, so that explosive weld may easily occur, that is, the weld imprint area is broken or explosive. By arranging two or more weld imprint areas, a portion of each of the tabs is welded to form the first weld imprint area 211, and then another portion of the each of the tabs is welded to form the second weld imprint area 212, it is possible to effectively avoid excessive heat generated by continuous welding.

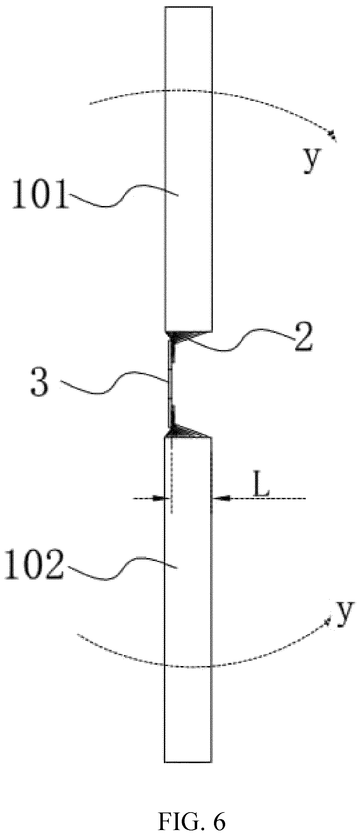

In some embodiments, as shown in FIGS. 5 and 6, the core 100 includes a first core 101 and a second core 102 connected in parallel, and the battery includes a connection sheet 3, where one end of the connection sheet 3 is connected to a tab of the first core 101, another end of the connection sheet 3 is connected to a tab of the second core 102, and the first core and the second core are connected in parallel by the connection sheet 3. The core of the battery is designed as two cores connected in parallel, so that the capacity of the battery can be increased while the current output capability of the battery can be enhanced, and the reliability of the battery can be improved. For example, when one of the cores fails, another of the cores can continue to work.

In a specific implementation, as shown in FIG. 6, the first core 101 and the second core 102 are superimposed in the thickness direction of the cores, where the direction in which the first core 101 and the second core 102 are combined is the y direction as shown in FIG. 6, and the distance L between the connection sheet 3 and the side surface 110 of the first core 101 or the second core 102 is in the range of 7.5mm to 9.0mm, which facilitates the weld strength between the connection sheet 3 and the tab of the first package 101 or the second package 102 to be improved and the volume utilization rate of the battery to be improved.

In a first aspect, embodiments of the present disclosure provide a core for a battery, including: an electrode sheet assembly including a plurality of electrode sheets each including a tab; where a plurality of tabs are welded to form a weld imprint area, a height of the tabs after folded is H1, and the height of the weld imprint area is H2; and where the core further has two side surfaces opposite to each other in a thickness direction of the core, a distance between the weld imprint area and one of the side surfaces is D, and a thickness of the core is d; and where 0.42≤arctan(((H1-H2)/(d-D))/arctan ((H1-H2)/D) ≤1.

In some embodiments, H1-H2≤d/2.

In some embodiments, a height of the electrode sheet assembly is H, and a ratio of H1 to H is in the range of 0.08 to 0.28; and/or H1 meets: 14mm≤H1≤22mm.

In some embodiments, a height of the electrode sheet assembly is H, and a ratio of H2 to H is in the range of 0.02 to 0.13; and/or H2 meets: 4mm≤H1≤10mm.

In some embodiments, 4≤d-D≤22.

In some embodiments, a ratio of D to d is in the range of 0.15 to 0.5; and/or, d meets: 17mm≤d≤26mm; and/or, D meets: 4mm≤D≤13mm.

In some embodiments, a portion of each of the tabs is welded to form a first weld imprint area, another portion of the each of the tabs is welded to form a second weld imprint area, and the first weld imprint area is spaced apart from the second weld imprint area.

In some embodiments, the core includes a first core and a second core connected in parallel, and the battery includes a connection sheet, where one end of the connection sheet is connected to a tab of the first core, and another end of the connection sheet is connected to a tab of the second core.

In a second aspect, the embodiments of the present disclosure provide a battery, including: a housing; and a core disposed in the housing and being the core as described above.

In a third aspect, the embodiments of the present disclosure provide a battery pack, including: a case; and a plurality of batteries disposed in the case and each being the battery as described above.

## Claims

1. A core (100) for a battery, comprising:
an electrode sheet assembly (1) comprising a plurality of electrode sheets (10) each comprising a tab (2);
wherein a plurality of tabs (2) are welded to form a weld imprint area (21), a height of the tabs (2) after folded is H1, and a height of the weld imprint area (21) is H2;
wherein the core (100) further has two side surfaces (110) opposite to each other in a thickness direction of the core (100), a distance between the weld imprint area (21) and one of the side surfaces (110) is D, and a thickness of the core (100) is d; and
wherein 0.42≤arctan((H1-H2)/(d-D))/arctan ((H1-H2)/D)≤1.

2. The core (100) of claim 1, wherein H1-H2≤d/2.

3. The core (100) of claim 2, wherein a height of the electrode sheet assembly (1) is H, and a ratio of H1 to H is in a range of 0.08 to 0.28.

4. The core (100) of claim 2 or 3, wherein H1 meets: 14mm≤H1≤22mm.

5. The core (100) of claim 2, wherein a height of the electrode sheet assembly (1) is H, and a ratio of H2 to H is in a range of 0.02 to 0.13.

6. The core (100) of claim 2 or 5, wherein H2 meets: 4mm≤H2≤10mm.

7. The core (100) of claim 1, wherein 4≤d-D≤22.

8. The core (100) of claim 7, wherein a ratio of D to d is in a range of 0.15 to 0.5.

9. The core (100) of claim 7 or 8, wherein d meets: 17mm≤d≤26mm.

10. The core (100) of claim 7 or 8, wherein D meets: 4mm≤D≤13mm.

11. The core (100) of claim 1, wherein a portion of each of the tabs (2) is welded to form a first weld imprint area (211), another portion of the each of the tabs (2) is welded to form a second weld imprint area (212), and the first weld imprint area (211) is spaced apart from the second weld imprint area (212).

12. The core (100) of claim 11, wherein the core comprises a first core (101) and a second core (102) connected in parallel, and the core comprises a connection sheet (3), where one end of the connection sheet (3) is connected to the tab (2) of the first core (101), and another end of the connection sheet (3) is connected to the tab (2) of the second core (102).

13. The core (100) of claim 12, wherein the first core (101) and the second core (102) are superimposed in a thickness direction of the core (100), a distance between the connection sheet (3) and a side surface (110) of the first core (101) or a side surface (110) of the second core (102) is L, and L meets: 7.5mm≤L≤9.0mm.

14. The core (100) of claim 1, wherein the plurality of electrode sheets (10) comprise a plurality of positive electrode sheets (11) and a plurality of negative electrode sheets (12), the positive electrode sheets (11) and the negative electrode sheets (12) each are provided in a prismatic shape, a difference between a length of each of the negative electrode sheets (12) and a length of corresponding one of the positive electrode sheets (11) is L1, L1 meets 0.5mm≤L1≤1.5mm, a difference between a width of the each of the negative electrode sheets (12) and a width of the corresponding one of the positive electrode sheets (11) is w1, and w1 meets 0.5mm≤w1≤2.5mm.

15. The core (100) of claim 14, wherein the electrode sheet assembly (1) further comprises a plurality of separators (13) each provided in a prismatic shape, a difference between a length of each of the separators (13) and a length of corresponding one of the negative electrode sheets (12) is L2, L2 meets 0.5mm≤L2≤1.5mm, a difference between a width of the each of the separators (13) and a width of the corresponding one of the negative electrode sheets (12) is w2, and w2 meets 1.0mm≤w2≤2.0mm.

16. A battery, comprising:
a housing; and
a core (100) disposed in the housing and being the core (100) of any of claims 1-15.

17. A battery pack, comprising:
a case; and
a plurality of batteries disposed in the case and each being the battery of claim 16.
